# EUROPEAN PATENT SPECIFICATION

(11) **EP 0 644 802 B1**
(45) Date of publication and mention of the grant of the patent: **12.03.1997**
(21) Application number: 93912677.7
(22) Date of filing: 03.06.1993
(51) Int. Cl.: B05B 3/02, H02K 7/16

(54) **A ROTARY ATOMIZER AND A METHOD OF OPERATING IT**
ROTATIONSZERSTÄUBER UND VERFAHREN ZU DESSEN VERWENDUNG
ATOMISEUR ROTATIF ET SON PROCEDE D'UTILISATION

(30) Priority: 12.06.1992 DK 787/92
(43) Date of publication of application: 29.03.1995
(73) Proprietor: NIRO HOLDING A/S, 2860 Soeborg (DK)
(72) Inventor: SVENDSEN, Gunnar, DK-3210 Vejby (DK)
(74) Representative: Raffnsöe, Knud Rosenstand
(86) International application number: PCT/DK93/00192
(87) International publication number: WO 93/25316

(56) References cited:
- EP-A- 0 349 829
- WO-A-91/11050
- US-A- 4 275 838
- US-A- 4 713 146

## Description

The invention relates to a rotary atomizer of the kind in which a disk- or wheel-shaped atomizing device is secured to one end of a shaft which is connected with the rotor of a high frequency asynchronous electric motor, the operating speed of which is controlled by a frequency converter to impart to the shaft a rotational speed substantially higher than the first critical speed of the shaft and atomizing device.

In general, rotary atomizers in which the atomizing disc or wheel is directly driven by a high speed electric motor such as known, e.g. from Keith Masters: "Spray Drying Handbook", 5th Edition, New York 1991, page 218, offer the advantage that a gear transmission between the drive motor and the atomizer is not required. In some prior art atomizers of this kind a comparatively short rigid shaft carrying the atomizing device at its lower end has been coupled with the rotor of the high frequency motor.

With such a design, the necessity to operate the atomizer within a speed range safely below the first critical speed of the shaft and the atomizer wheel sets limits to the diameter range of atomizer wheels, for which a direct high frequency motor drive can be successfully used when the circumferential velocity required for atomization is to be achieved.

From US-A-4,713,146 it is known to operate rotary atomizers at rotational speeds higher than the first critical speed of the rotating parts by a rather complicated shaft design involving incorporation of spring means between inner and outer shaft members to permit flexible pivotal motions of the shaft during start and stop of the atomizer.

On this background, it is the object of the invention to provide a rotary atomizer of the kind described which to a much lesser extent suffers from the described limitations and may thus be successfully used for a far wider range of rotary atomizers down to small-scale atomizers with a power consumption of 1 kW and with a smaller wheel diameter down to, e.g. 90mms or less and which provides flexibility of the shaft with a simple design of the rotary system.

According to the invention this object is achieved by a design characterized in that the shaft and the rotor are designed as one integral unit with the rotor surrounding a part of the shaft remote from said one end, said shaft and rotor unit being radially supported only by radial bearings at either end of said part of the shaft.

By operating the atomizer at supercritical rotational speed the atomizing device will be self-aligning during operation, and the whole system will be less sensitive to dynamic imbalances caused by tolerances or imperfections in the atomizer wheel geometry and/or irregularities in the feeding of the product to be atomized.

The design of the shaft and the rotor of the high frequency motor as one integral unit offers the advantage of a very compact design which is particularly useful in small-size atomizers designed to handle feed volumes down to about 50 litres per hour. However, the invention is in no way limited to such applications but may successfully be put into operation for a substantial range of wheel diameters up to large size atomizer wheels having a diameter of 350 mms or more and designed for a product handling capacity of 200 tons per hour or more.

The invention furthermore relates to a method of operating a rotary atomizer of the kind in which a disk- or wheel-shaped atomizing device is secured to one end of a shaft which is directly connected with the rotor of a high frequency asynchronous electric motor, the operating speed of which is controlled by a frequency converter to impart to the shaft a rotational speed substantially higher than the first critical speed of the shaft and atomizing device.

According to the invention this method is characterized in that with the shaft and the rotor designed as an integral unit with the rotor surrounding a part of the shaft remote from said one end and with said shaft and rotor unit radially supported only by radial bearings at either end of said part of the shaft, said frequency converter is operated to control the motor to rotate the shaft at a speed within a range from 2 to 10 times the first critical speed.

In typical applications the operational speed will preferably be in a range of 2 to 10 times the first critical speed of the rotating parts, and dependent on the wheel size the operative speed range may be, e.g. from 15,000 to 30,000 rpm for smaller sizes and from 5,000 to 10,000 rpm for larger sizes.

Taking account of these operating conditions, the supporting shaft for the atomizing device must be a "soft" or "elastic" shaft dimensioned to provide together with the other rotating parts of the atomizer a first critical speed which will typically be in the range from 500 to 6,000 rpm and preferably within the range of 1,000 to 5,000 rpm.

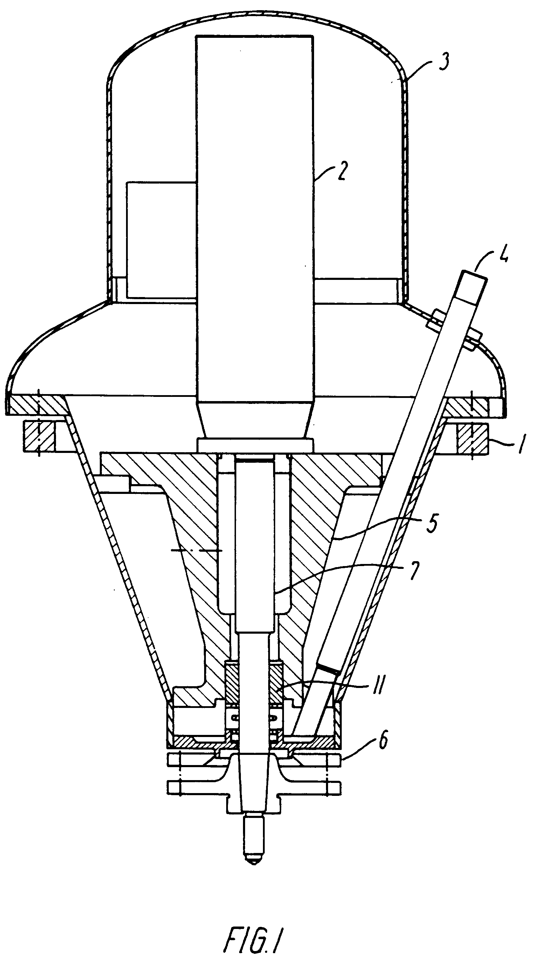

In the following, the invention will be further explained with reference to the accompanying drawings in which
Fig 1 is a sectional view of an embodiment of a rotary atomizer according to the invention; and
Fig 2 shows the drive shaft of the atomizer in Fig 1 with an atomizer wheel mounted at its lower end and the rotor windings of the high frequency drive motor secured to the upper part of the shaft.

The illustrated embodiment of a rotary atomizer according to the invention is designed for installation in the upper part of a chamber such as a spray drying chamber and comprises a support bracket 1 for connection with a ceiling wall of the chamber.

The support bracket 1 supports the frame or casing 2 of a drive motor which is a high frequency asynchronous electric motor controlled by a frequency converter, not illustrated, as is well known in the art.

The motor casing 2 is covered by an external shield 3 which may protrude above the ceiling of the chamber, and through which a feed pipe 4 for the supply of the product, e.g. a liquid to be atomized, extends downwards through the lower atomizer casing 5 to terminate opposite the atomizing device which in the illustrated embodiment is an atomizer wheel 6 that may in itself be in a conventional design.

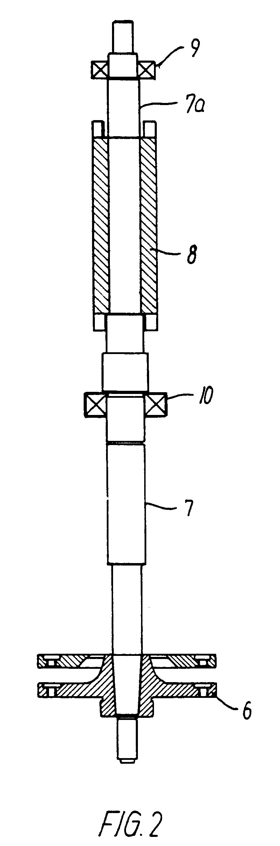

The atomizer wheel 6 is secured at the lower end of a drive shaft 7 which in accordance with the invention is designed as an integral one-piece spindle extending substantially vertically upwards into the motor casing 2 where as shown in Fig 2 the rotor winding 8 of the high frequency electric motor is secured directly to an upper part 7a of the shaft.

As illustrated, the shaft is designed as a comparatively slender solid spindle which is radially supported only by bearings 9 and 10 arranged on either side of said upper part 7a of the shaft in the motor casing 2 and of which the lower support bearing 10 also serves the axial support of the shaft 7.

With the relatively great free length 7b of the shaft extending downwards from the lower support bearing 10 towards the atomizer wheel 6 radial deflection of the rotating parts of the atomizer will be permitted when passing the first critical speed during start and stop of the atomizer.

In typical cases the shaft and the atomizing device are dimensioned to have a first critical speed within the range of 500 to 6,000 rpm, and preferably the rotating parts are dimensioned to have said first 30 critical speed within the range of 1,000 to 5,000 rpm.

It is well known in the art to design and dimension parts of rotating systems to have specific critical speed values, e.g. by means of computer-aided engineering. Typically, the second critical speed of the rotating parts will be several orders higher than the first critical speed, e.g. more than ten times higher.

By control via the non-illustrated frequency converter, the electric drive motor is operated to impart a rotational speed to the shaft substantially higher than the first critical speed of the rotating parts.

As mentioned hereinbefore, a preferred speed range may be from 2 to 10 times the first critical speed of the rotating parts.

In order to limit the radial deflection of the rotating parts during start and stop of the atomizer, a guide bearing 11 having a radial clearance in respect of the shaft 7 may be arranged in the lower atomizer casing 5 relatively close above the atomizer wheel 6. The bearing 11 may, e.g. be a graphite bearing.

## Claims

1. A rotary atomizer of the kind in which a disk- or wheelshaped atomizing device (6) is secured to one end of a shaft (7) which is connected to the rotor (8) of a high frequency asynchronous electric motor (2), the operating speed of which is controlled by a frequency converter to impart to the shaft a rotational speed substantially higher than the first critical speed of the shaft (7) and atomizing device (6), **characterized** in that the shaft (7) and the rotor (8) are designed as one integral unit with the rotor (8) surrounding a part (7a) of the shaft (7) remote from said one end, said shaft and rotor unit being radially supported only by radial bearings (9, 10) at either end of said part (7a) of the shaft (7).

2. A rotary atomizer as claimed in claim 1, **characterized** in that the operating speed is within a range from 2 to 10 times the first critical speed.

3. A rotary atomizer as claimed in claim 1 or 2, **characterized** in that the shaft and the atomizing device are dimensioned to have a first critical speed within the range of 500 to 6,000 rpm.

4. A rotary atomizer as claimed in claim 3, **characterized** in that the shaft and the atomizing device are dimensioned to have a first critical speed within the range of 1,000 to 5,000 rpm.

5. A rotary atomizer as claimed in one of claims 1 to 4, **characterized** in that the atomizing device (6) is designed so as to provide a peripheral speed within the range of 50 to 350 m/sec.

6. A rotary atomizer as claimed in claim 1 or 2, **characterized** in that an additional guide bearing (11) having a radial clearance in respect of the shaft (7) is arranged relatively close to the atomizing device (6) to limit the radial deflection of the shaft (7).

7. A method of operating a rotary atomizer of the kind in which a disk- or wheel-shaped atomizing device (6) is secured to one end of a shaft (7) which is directly connected with the rotor (8) of a high frequency asynchronous electric motor (2), the operating speed of which is controlled by a frequency converter to impart to the shaft a rotational speed substantially higher than the first critical speed of the shaft (7) and atomizing device (6), **characterized** in that with the shaft (7) and the rotor (8) designed as an integral unit with the rotor (8) surrounding a part (7a) of the shaft remote from said one end and with said shaft and rotor unit radially supported only by radial bearings at either end of said part (7a) of the shaft (7), said frequency converter is operated to control the motor to rotate the shaft at a speed within a range from 2 to 10 times the first critical speed.

## Patentansprüche

1. Rotationszerstäuber der Art, in der eine scheiben- oder radförmige Zerstäubungseinrichtung (6) an das eine Ende einer an den Rotor (8) eines hochfrequenten asynchronen Elektromotors (2) angeschlossenen Welle (7) befestigt ist, dessen Betriebsdrehzahl von einem Frequenzwandler gesteuert wird, um der Welle eine Rotationsgeschwindigkeit zu verleihen, die wesentlich grösser ist als die erste kritische Geschwindigkeit der Welle (7) und der Zerstäubungseinrichtung (6), dadurch **gekennzeichnet**, dass die Welle (7) und der Rotor (8) als eine integrierte Einheit ausgebildet ist, in der der Rotor (8) einen von erwähntem Ende entfernt liegenden Teil (7a) der Welle (7) umschliesst, und dass die Wellen- und Rotoreinheit nur durch an jedem Ende des genannten Teils (7a) der Welle (7) vorgesehene Radiallager (9, 10) unterstützt ist.

2. Rotationszerstäuber nach Anspruch 1, dadurch **gekennzeichnet**, dass die Betriebsdrehzahl im Bereich 2 bis 10 mal der ersten kritischen Geschwindigkeit liegt.

3. Rotationszerstäuber nach Anspruch 1 oder 2, dadurch **gekennzeichnet**, dass die Welle und die Zerstäubungseinrichtung für eine erste kritische Geschwindigkeit im Bereich 500 bis 6.000 min⁻¹ ausgebildet sind.

4. Rotationszerstäuber nach Anspruch 3, dadurch **gekennzeichnet**, dass die Welle und die Zerstäubungseinrichtung für eine erste kritische Geschwindigkeit im Bereich 1.000 bis 5.000 min⁻¹ ausgebildet sind.

5. Rotationszerstäuber nach einem der Ansprüche 1-4, dadurch **gekennzeichnet**, dass die Zerstäubungseinrichtung für eine Peripheriegeschwindigkeit im Bereich 50-350 m/sek. ausgebildet ist.

6. Rotationszerstäuber nach Anspruch 1 oder 2, dadurch **gekennzeichnet**, dass nahe der Zerstäubungseinrichtung (6) ein zusätzliches Führungslager (11) mit einem im Verhältnis zur Welle (7) radialen Spiel zur Begrenzung des radialen Durchbiegens der Welle (7) vorgesehen ist.

7. Verfahren zu Verwendung eines Rotationszerstäubers der Art, in der eine scheiben- oder radförmige Zerstäubungseinrichtung (6) an das eine Ende einer direkt an den Rotor (8) eines hochfrequenten asynchronen Elektromotors (2) angeschlossenen Welle (7) befestigt ist, dessen Betriebsdrehzahl von einem Frequenzwandler gesteuert wird, um der Welle eine Rotationsgeschwindigkeit zu verleihen, die wesentlich grösser ist als die erste kritische Geschwindigkeit der Welle (7) und der Zerstäubungseinrichtung (6), dadurch **gekennzeichnet**, dass mit der Welle (7) und dem Rotor (8) als eine integriert ausgebildete Einheit, in der der Rotor (8) einen von erwähntem Ende entfernt liegenden Teil (7a) der Welle (7) umschliesst, und mit der Wellen-und Rotoreinheit, die nur durch an jedem Ende des genannten Teils (7a) der Welle (7) vorgesehene Radiallager unterstützt ist, der Frequenzwandler zur Steuerung des Motors zwecks Rotation der Welle mit einer Geschwindigkit im Bereich 2 bis 10 mal der ersten kritischen Geschwindigkeit angetrieben wird.

## Revendications

1. Atomiseur rotatif du type où un dispositif (6) d'atomisation en forme de disque ou de roue est fixé à l'un bout d'un arbre (7) qui est relié au rotor (8) dans un moteur (2) électrique asynchrone et à haute fréquence dont la vitesse de fonctionnement est contrôlée par un convertisseur de fréquence pour impartir à l'arbre une vitesse de rotation essentiellement plus haute que la première vitesse critique de l'arbre (7) et du dispositif (6) d'atomisation, **caractérisé** en ce que l'arbre (7) et le rotor (8) sont conçus comme une unité intégrée avec le rotor (8) enveloppant une portion (7a) de l'arbre située loin dudit bout, ladite unité de l'arbre et le rotor n'étant radialement supportée que par des moyeux radiaux (9, 10) à chaque bout de ladite portion (7a) de l'arbre (7).

2. Atomiseur rotatif selon la revendication 1, **caractérisé** en ce que la vitesse de fonctionnement est aux environs de 2 à 10 fois la première vitesse critique.

3. Atomiseur rotatif selon la revendication 1 ou 2, **caractérisé** en ce que l'arbre et le dispositif d'atomisation sont dimensionnés de manière à présenter une première vitesse critique aux environs de 500 à 6.000 tours-minute.

4. Atomiseur rotatif selon la revendication 3, **caractérisé** en ce que l'arbre et le dispositif d'atomisation sont dimensionnés de manière à présenter une première vitesse aux environs de 1.000 à 5.000 tours-minute.

5. Atomiseur rotatif selon l'une quelconque des revendications 1 à 4, **caractérisé** en ce que le dispositif (6) d'atomisation est conçu de manière à présenter une vitesse périphérique aux environs de 50 à 350 mètres par seconde.

6. Atomiseur rotatif selon la revendication 1 ou 2, **caractérisé** en ce qu'un moyeu (11) d'appui supplémentaire ayant un jeu libre radial par rapport à l'arbre (7) est situé relativement près du dispositif (6) d'atomisation pour limiter le fléchissement de l'arbre (7).

7. Procédé d'utilisation d'un atomiseur rotatif du type où un dispositif (6) d'atomisation en forme de disque ou de roue est fixé à l'un bout d'un arbre (7) qui est directement relié au rotor (8) d'un moteur (2) électrique asynchrone et à haute fréquence dont la vitesse de fonctionnement est contrôlée par un convertisseur de fréquence pour impartir à l'arbre une vitesse de rotation essentiellement plus haute que la première vitesse critique de l'arbre (7) et du dispositif (6) d'atomisation, **caractérisé** en ce que l'arbre (7) et le rotor (8) étant conçus comme une unité intégrée avec le rotor (8) enveloppant une portion (7a) de l'arbre située loin de l'un dit bout et ladite unité de l'arbre et le rotor n'étant radialement supportés que par des moyeux radiaux à chaque bout de ladite portion (7a) de l'arbre (7), ledit convertisseur de fréquence est utilisé pour contrôler le moteur de manière à faire tourner l'arbre à une vitesse aux environs de 2 à 10 fois la première vitesse critique.
